# EUROPEAN PATENT APPLICATION

(11) **EP 4 195 722 A1**
(43) Date of publication of application: **14.06.2023**
(21) Application number: 22186859.9
(22) Date of filing: 26.07.2022
(51) Int. Cl.: H04W 4/90, H04W 4/021, H04W 4/06, H04W 4/12

(54) **SYSTEM FOR PROVIDING DISASTER NOTIFICATION CONTENTS**

(30) Priority: 13.12.2021 KR 20210177481
(71) Applicant: Active D&C Co., Ltd., Seoul 08591 (KR)
(72) Inventor: Kim, Woong, 16336 Suwon (KR); Park, NamHae, 08736 Seoul (KR); Jeon, Chang Hyun, 05276 Seoul (KR)
(74) Representative: Zimmermann, Tankred Klaus

(57) **Abstract**

The present disclosure provides a system for providing disaster notification contents (DNC).

The system may systematically arrange/provide, in a communication structure of a DNC sending agency server, user information device, etc., <a computational module configured to communicate with the DNC sending agency server to collect various DNCs>, <a computational module configured to read the collected DNCs and check the DNC related area, then to compare the checked DNC-related areas to a preset user disaster interest areas to determine the users whose disaster interest areas match the DNC-related areas as DNC sending target users among the pre-stored users>, and <a computational module configured to send/process DNC to user information devices owned by the users included in the read DNC sending target user list after reading the DNC sending target user list determined as DNC sending target users>

## Description

### BACKGROUNG OF THE INVENTION

### Technical Field of the Invention

The present disclosure relates to a system that sends/provides various disaster notification contents (DNC), such as disaster notification text, disaster notification video, and disaster notification news, to a user, more particularly, a system that may systematically arrange/provide, in a communication structure of a DNC sending agency server, user information device, etc., <a computational module configured to communicate with the DNC sending agency server to collect various DNCs>, <a computational module configured to read the collected DNCs and check the DNC related area, then to compare the checked DNC-related areas to a preset user disaster interest areas to determine the users whose disaster interest areas match the DNC-related areas as DNC sending target users among the pre-stored users>, and <a computational module configured to send/process DNC to user information devices owned by the users included in the read DNC sending target user list after reading the DNC sending target user list determined as DNC sending target users>. In addition, the present disclosure relates to a system that may systematically implement <reading 'user setting information' of the preset DNC sending target users, checking 'user setting notification limit time information', and excluding some users whose 'user setting notification limit time' is corresponding to the current time from the DNC sending target users, when determining the users whose disaster interest areas match the DNC-related areas as DNC sending target users among the pre-stored users>, <reading 'user DNC receiving history information' of each of the pre-stored DNC sending target users, checking 'previously received user DNC version information', and then excluding some users whose previously received DNC version is the same as the current DNC version', when determining the users whose disaster interest areas match the DNC-related areas as DNC sending target users among the pre-stored users>, thereby supporting to effectively enjoy an advantage of being able to select and receive only valid DNCs related to the interest area set by the user, rather than receiving all DNCs in discriminately, another advantage of not receiving duplicate DNCs of the same content (version), and a further advantage of blocking DNC reception during the notification limit time set by the user; and an advantage of improving DNC sending efficiency (i.e., solving the problem of not sending DNC to users who need DNC due to unnecessary DNC sending).

### Description of the Prior Art

Recently, as needs for rapid response to disasters is emerging as a very important social issue, various technologies that can provide/distribute various disaster notification contents (hereinafter, DNC) such as disaster notification text, disaster notification video, and disaster notification news to users more efficiently are being developed/distributed widely.

For example, conventional DNC distribution technology is disclosed in more detail in Korea Patent No. 10-1794252 (Title: A Message Circulation System for Contingency Accident/Disaster) (published on November 7, 2017), Korea Patent No. 10-2088194 (Title: System and Method for Broadcasting Remote Site Disaster Notification Through Audio Streaming Based on IoT) (published on March 12, 2020), Korea Patent Publication No. 10-2020-124139 (Title: Method and Apparatus FOF Cell Broadcasting Service using Broadcast Network) (published on November 2, 2020), Korean Patent Publication No. 10-2017-45499 (Title: Emergency Disaster Notification Service System Using Wifi Beacon) (published on Apr. 27, 2017), and Korean Patent Publication No. 10-2020-10849 (Title: Disaster Information Letter Sending System for Bus on Regular Route and Method thereof) (published on January 31,2020).

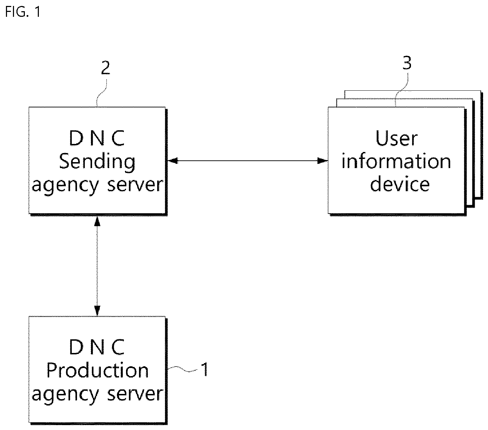

According to the conventional technologies, as shown in FIG. 1, a DNC sending agency server 2 (e.g., a server managed by a disaster safety management agency, a server managed by a government agency, etc.) communicates with a DNC production agency server 1 (e.g., a server managed by a broadcasting station, a server managed by a fire department, and a server managed by the Meteorological Agency, etc.) and collects DNC sent from the DNC production agency server 1. After that, when a series of DNC sending events occur, the DNC sending agency server 2 sends the collected DNC to a user information device 3 (e.g., a smart phone, a tablet PC, etc.).

However, in the conventional technologies, the DNC sending agency server 2 sends DNC produced by the DNC production agency server 1 to the user information device indiscriminately, without considering the user's situation, for example, the user location, whether the user has already received the DNC, etc. For these reasons, unless taking separate actions, the user has to forcibly receive unnecessary DNC even though the disaster area is completely unrelated to the user's location or the area in which the user is interested, and to repeatedly receive the same DNC with the same content. Even in the DNC sending organization, there is a problem in that the DNC cannot be sent to users who actually need to receive the DNC because DNC is sent unnecessarily and indiscriminately.

### Documents of Related Art

**(Related Document 1)** KR Patent No.10-1794252 (Title: A Message Circulation System for Contingency Accident/Disaster) (Announced on November 7,2017)
**(Related Document 2)** KR Patent No.10-2088194 (Title: System and Method for Broadcasting Remote Site Disaster Notification Through Audio Streaming Based on IoT) (Announced on March 12,2020)
**(Related Document 3)** KR Patent Publication No.10-2020-124139(Title: Method and Apparatus FOF Cell Broadcasting Service FOF Cell using Broadcast Network) (Published on November 2, 2020)
**(Related Document 4)** KR Patent Publication No.10-2017-45499 (Title: Disaster Notification Service System using a WiFi Beacon) (Published on April 27, 2017)
**(Related Document 5)** KR Patent Publication No.10-2020-10849 (Title: Disaster Information Letter Sending System for Bus on Regular Route and Method thereof) (Published on January 31,2020)

### SUMMARY OF THE INVENTION

### Technical Problem

An objective of the present disclosure is to provide a system that may arrange/provide, in a communication structure of the DNC sending agency server, the user information device, etc., <a computational module configured to communicate with the DNC sending agency server to collect various DNCs>, <a computational module configured to read the collected DNCs and check a DNC related area, then to compare the checked DNC-relates area to a preset user disaster interest area to determine the users whose disaster interest areas matches the DNC-related areas as DNC sending target users among the previously stored users>, and <a computational module configured to send/process DNC to user information devices owned by the users included in the read DNC sending target user list, after reading the DNC sending target user list determined as DNC sending target users>. In addition, an object of the present disclosure is to provide a system that may systematically implement <reading 'user setting information' of the preset DNC sending target users, checking 'user setting notification limit time information', and excluding some users whose 'user setting notification limit time' is corresponding to the current time from the DNC sending target users, when determining the users whose disaster interest areas match the DNC-related areas as DNC sending target users among the pre-stored users>, <reading 'user DNC receiving history information' of each of the pre-stored DNC sending target users, checking 'previously received user DNC version information', and then excluding some users whose previously received DNC version is the same as the 'current DNC version', when determining the users whose disaster interest areas match the DNC-related areas as DNC sending target users among the pre-stored users>, thereby supporting to effectively enjoy an advantage of being able to select and receive only valid DNCs related to the interest area set by the user, rather than receiving all DNCs in discriminately, another advantage of not receiving duplicate DNCs of the same content (version), and a further advantage of blocking DNC reception during the notification limit time set by the user; and an advantage of improving DNC sending efficiency (i.e., solving the problem of not sending DNC to users who need DNC due to unnecessary DNC sending).

Another objective of the present disclosure becomes more apparent from the following detailed description and accompanying drawings.

### Technical Solution

In order to achieve the above objectives, the present disclosure may include a DNC collecting module configured to communicate with a DNC (Disaster Notification Contents) sending agency server and collect various DNCs; a DNC sending determination module configured to read the DNC collected by the DNC collecting module, check the DNC-related area, compare a DNC-related area to a preset user interest area among previously stored users, and then determine users whose disaster interest areas match the DNC-related area as DNC sending target users based on the result of comparison; and a DNC sending processing module configured to communicate with the DNC sending determination module, read the DNC sending target user list determined as DNC sending target users, and send the DNCs collected by the DNC collecting module to each of the user information devices owned by users included in the DNC sending target user list.

In this case, the DNC sending determination module may read a preset 'user setting information' of each DNC sending target user, check a 'user setting notification limit time information', and exclude some users whose current time is within the 'user setting notification limit time' from the DNC sending target users, when determining DNC sending target users whose disaster interest areas match the DNC-related areas as DNC sending target users.

In addition, the DNC sending determination module may read a preset 'user DNC reception history information' of each DNC sending target user, check the 'previously received user DNC version information', and exclude some users whose 'previously received DNC version' is the same as the 'current DNC version' from the DNC sending target users.

### Advantageous Effects

As described above, the system which provides the disaster notification contents has the following effects. The system according to the present disclosure may arrange/provide, in the communication structure of the DNC sending agency server and the user information device, etc., <the computational module that may collect various DNCs by communicating with the DNC sending agency server>, <the computational module that may read the collected DNCs, check the DNC related area, then compare the checked DNC-relates area with the preset user disaster interest area, and determine the users whose disaster interest areas match the DNC-related areas as DNC sending target users among the previously stored users>, and <the computational module that may send/process DNC to user information devices owned by the users included in the DNC sending target user list, after reading the DNC sending target user list determined as DNC sending target users>. In addition, the system according to the present disclosure may systematically implement <reading 'user setting information' of the preset DNC sending target users, checking 'user setting notification limit time information', and excluding some users whose 'user setting notification limit time' is corresponding to the current time from the DNC sending target users, when determining the users whose disaster interest areas match the DNC-related areas as DNC sending target users among the pre-stored users>, <reading 'user DNC receiving history information' of each of the pre-stored DNC sending target users, checking 'previously received user DNC version information', and then excluding some users whose previously received DNC version is the same as the 'current DNC version', when determining the users whose disaster interest areas match the DNC-related areas as DNC sending target users among the pre-stored users>, thereby supporting to effectively enjoy an advantage of being able to select and receive only valid DNCs related to the interest area set by the user, rather than receiving all DNCs in discriminately, another advantage of not receiving duplicate DNCs of the same content (version), and a further advantage of blocking DNC reception during the notification limit time set by the user; and an advantage of improving DNC sending efficiency (i.e., solving the problem of not sending DNC to users who need DNC due to unnecessary DNC sending).

### BRIEF DESCRIPTION OF THE INVENTION

FIG. 1 is an exemplary diagram illustrating a DNC providing procedure according to the prior art.
FIG. 2 is an exemplary diagram illustrating a DNC providing procedure according to the present disclosure.
FIG. 3 is an exemplary diagram illustrating a detailed configuration of a DNC providing system according to the present disclosure.
FIG. 4 to 6 are exemplary views conceptually illustrating a detailed function execution procedure of the DNC providing system according to the present disclosure.

### DETAILED DESCRIPTION OF THE PREFERED EMBODIMENTS

Hereinafter, a DNC providing system according to the present disclosure will be described in more detail with reference to the accompanying drawings.

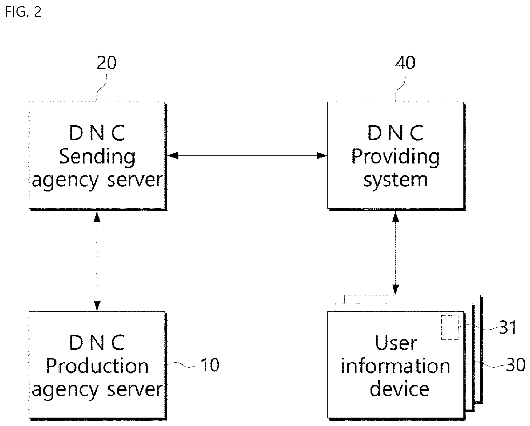

As shown in FIG. 2, in the system of the present disclosure, a DNC sending agency server 20 (e.g., a server managed by a disaster safety management agency, a server managed by a government agency, etc.) may communicate with a DNC production agency server 10 (e.g., a server managed by a broadcasting station, a server managed by a fire department, and a server managed by the Meteorological Agency, etc.) and collect DNC sent from the DNC production agency server 10. After that, when a series of DNC sending events occur, the DNC sending agency server 20 may send the collected DNC to a user information device 30 (e.g., a smart phone, a tablet PC, etc.).

Of course, even in the system of the present disclosure, in case where the DNC sending agency server 20 sends DNC produced by the DNC production agency server 10 to the user information device blindly, without considering the user's situation at all, the user may experience the problems of forcibly receiving unnecessary DNC even though the disaster area is completely unrelated to the user's area or the area in which the user is interested, and 'receiving the same DNC repeatedly.' Meanwhile, on the side of the DNC sending agency, there is a problem in that the DNC cannot be sent to users who actually need to receive the DNC due to excessive DNC sending.

To solve the problems described above, in the present disclosure, the DNC providing system may be additionally installed in the communication structure of the DNC sending agency server 20 and the user information device 30, etc., as shown in FIG. 2.

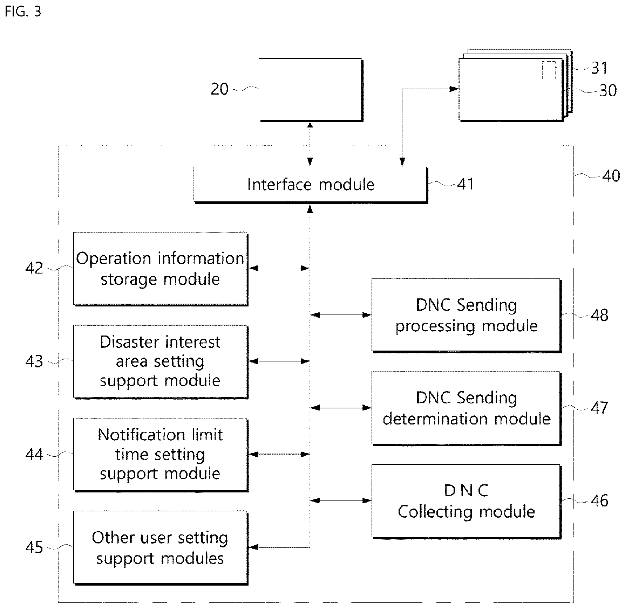

In this case, as shown in FIG. 3, the DNC providing system 40 according to the present disclosure may include an interface module 41, an operation information storage module 42 configured to communicate with DNC sending agency server 20, user information device 30, etc., via the interface module 41, a disaster interest area setting support module 43, a notification limit time setting support module 44, other user setting support modules 45, a DNC collecting module 46, a DNC sending determination module 47, a DNC sending processing module 48, and the like, which are closely configured.

In such the configuration, the operation information storage module 42 may store and manage various operation information such as registration information of the DNC sending agency server 20, registration information of the user information device 30, user's personal information, user's subscription information, user's DNC notification method setting information, user's disaster interest area setting information, user's notification limit time setting information, program source information for supporting function performance of each computational module, version information of the DNC reception guide application 31 installed in the user information device 30, and a program source information for forming/maintaining a communication session, thereby assisting the series of DNC sending procedures according to the present disclosure to proceed efficiently without any problems.

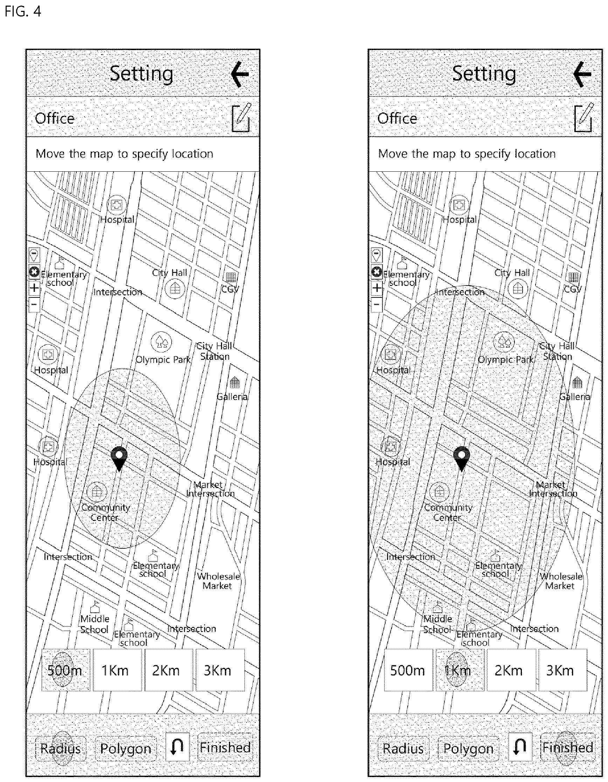

The disaster interest area setting support module 43 may communicate with a DNC reception guide application 31 installed in the user information device 30. In this case, as shown in FIG. 4, when the user operates the user information device 30 and the DNC reception guide application 31 to set the disaster interest area, the disaster interest area setting support module 43 may serve to store the set user disaster interest area information in the operation information storage module 42.

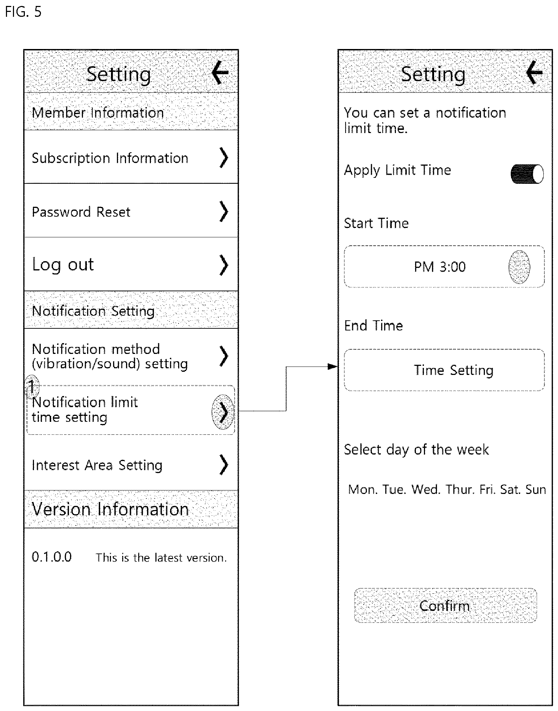

The notification limit time setting support module 44 may communicate with the DNC reception guide application 31 installed in the user information device 30. In this case, as shown in FIG. 5, when the user operates the user information device 30 and the DNC reception guide application 31 to set notification limit time information, the notification limit time setting support module 44 may serve to store the set user notification limit time information in the operation information storage module 42.

Other user setting support modules 45 may communicate with the DNC reception guide application 31 installed in the user information device 30. In this case, as shown in FIG. 5, when the user operates the user information device 30 and the DNC reception guide application 31 to input other setting information, such as personal information, subscription information, DNC notification method setting information, etc., other user setting support module 45 may serve to store the other setting information written in the operation information storage module 42.

Under such the infrastructure, the DNC collecting module 46 may communicate with the DNC sending agency server 20 to perform various DNC collecting procedures.

Under the condition that the DNC may be collected by the DNC collecting module 46, the DNC sending determination module 47 may read the DNC, check the DNC-related area, compare the checked DNC-related area with the preset user disaster interest area among the previously stored users, and then determine users whose disaster interest area matches the DNC-related area as DNC sending target users.

According to the above procedure, the DNC sending determination module 47 may read the preset 'user setting information' of each DNC sending target user, check the 'User setting notification limit time information', and exclude some users whose current time is within the 'user setting notification limit time' from the DNC sending target users, when determining the DNC sending target users whose disaster interest areas match the DNC-related areas.

In addition, according to the above procedure, when determining DNC sending target users whose disaster interest areas match the DNC-related areas, the DNC sending determination module 47 may read the 'User DNC reception history information' of each DNC sending target user stored previously, check the 'previous received user DNC version information', and exclude some users whose 'previously received DNC version' is the same as the 'current DNC version' from the DNC sending target users.

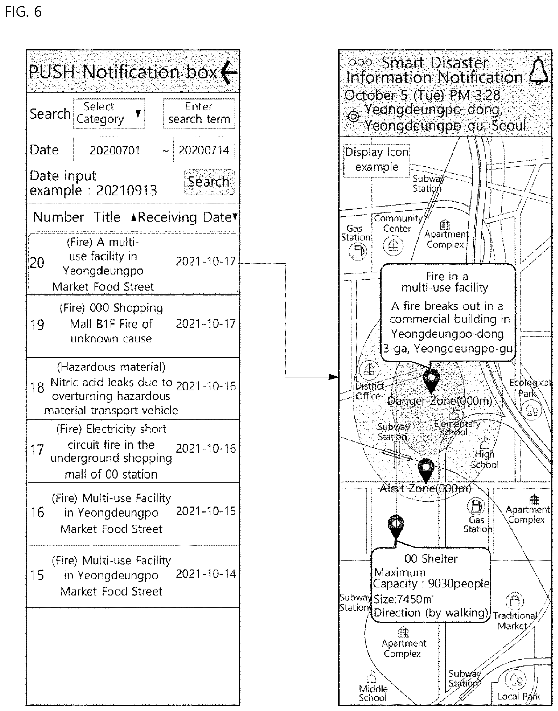

Meanwhile, the DNC sending processing module 48 may communicate with the DNC sending determination module 47, read the DNC sending target users list determined as DNC sending target users, and send the DNC collected by the DNC collecting module 46 to the user information device 30 owned by users included in the DNC sending target user list. As a result, as shown in FIG. 6, the user included in the DNC sending target user list may receive the valid DNC required for the user.

As such, the present disclosure may provide the system that may arrange/provide, in the communication structure of the DNC sending agency server and the user information device, etc., <the computational module that can collect various DNCs by communicating with a DNC sending agency server>, <the computational module that can read the collected DNCs and check the DNC related area, then compare the checked DNC-relates areas with preset user disaster interest areas, and determine the users whose disaster interest areas match the DNC-related areas from among the previously stored users as DNC send target users>, and <the computational module that can send/process DNC to user information devices owned by the users included in the DNC send target user list after reading the DNC target user list determined as DNC send target users>, In addition, the system may systematically implement <reading 'user setting information' of the preset DNC sending target users, checking 'user setting notification limit time information', and excluding some users whose 'user setting notification limit time' is corresponding to the current time from the DNC sending target users, when determining the users whose disaster interest areas match the DNC-related areas as DNC sending target users among the pre-stored users>, <reading 'user DNC receiving history information' of each of the pre-stored DNC sending target users, checking 'previously received user DNC version information', and then excluding some users whose previously received DNC version is the same as the 'current DNC version', when determining the users whose disaster interest areas match the DNC-related areas as DNC sending target users among the pre-stored users>, thereby supporting to effectively enjoy an advantage of being able to select and receive only valid DNCs related to the interest area set by the user, rather than receiving all DNCs in discriminately, another advantage of not receiving duplicate DNCs of the same content (version), and a further advantage of blocking DNC reception during the notification limit time set by the user; and an advantage of improving DNC sending efficiency (i.e., solving the problem of not sending DNC to users who need DNC due to unnecessary DNC sending).

The present disclosure may not be limited to a specific field, and may express useful effects in various fields requiring efficient delivery quality of public messages.

In addition, although specific embodiments of the present disclosure have been described and illustrated, it is obvious that the present disclosure may be practiced with various modifications by those skilled in the art.

Such modified embodiments should not be individually understood from the technical spirit or point of view of the present disclosure, and such modified embodiments should fall within the scope of the appended claims of the present disclosure.

## Claims

1. A system which provides disaster notification contents comprising:
a DNC collecting module configured to communicate with a disaster notification contents (DNC) sending agency server and collect various DNCs;
a DNC sending determination module configured to read the DNC collected by the DNC collecting module, check a DNC-related area, compare the DNC-related area with a preset user disaster interest area, and determine users whose disaster interest area matches the DNC-related area as DNC sending target users among the pre-stored users based on the result of comparison; and
a DNC sending processing module configured to communicate with the DNC sending determination module, read the DNC sending target users list determined as DNC sending target users, and send the DNC collected by the DNC collecting module to the user information device owned by users included in the DNC sending target user list.

2. The system of claim 1, wherein, the DNC sending determination module reads the preset 'user setting information' of each DNC sending target user, checks the 'user setting notification limit time information' and excludes some users whose current time is within the 'user setting notification limit time' from the DNC sending target users, when determining DNC sending target users whose disaster interest areas match the DNC-related areas as DNC sending target users.

3. The system of claim 1, wherein, the DNC sending determination module reads the preset 'user DNC reception history information' of each DNC sending target user, checks the 'previously received user DNC version information', and excludes some users whose 'previously received DNC version' is the same as the 'current DNC version' from the DNC sending target users, when determining DNC sending target users whose disaster interest areas match the DNC-related areas as DNC sending target users.

4. The system of claim 1, further comprising:
a disaster interest area setting support module configured to communicate with a DNC receiving guide application installed in the user information device and store the user interest area therein, when the user manipulates the user information device to set a disaster interest area.

5. The system of claim 1, further comprising:
a notification limit time setting support module configured to communicate with the DNC reception guide application installed in the user information device and store the set user notification limit time information therein, when the user manipulates the user information device and the DNC reception guide application to set the notification limit time information.
